# EUROPÄISCHE PATENTSCHRIFT

(11) **EP 1 729 042 B1**
(45) Veröffentlichungstag und Bekanntmachung des Hinweises auf die Patenterteilung: **11.02.2009**
(21) Anmeldenummer: 05011784.5
(22) Anmeldetag: 01.06.2005
(51) Int. Cl.: F16J 3/04

(54) **Faltenbalg für Gelenke**
Protective boot for universal joint
Soufflet de protection pour joint universel

(43) Veröffentlichungstag der Anmeldung: 06.12.2006
(73) Patentinhaber: Carl Freudenberg KG, 69469 Weinheim (DE)
(72) Erfinder: Schirmer, Stefan, 31275 Lehrte (DE)

(56) Entgegenhaltungen:
- EP-A- 1 508 729

## Beschreibung

### Technisches Gebiet

Die Erfindung betrifft einen Faltenbalg, umfassend einen Grundkörper mit einem ersten Ende und einem zweiten Ende, wobei die Enden relativ zueinander bewegbar sind, wobei im Grundkörper zwischen den Enden umfängliche Auswölbungen ausgebildet sind, welche durch erste Einschnürungen voneinander beabstandet sind, und wobei in mehreren Auswölbungen eine zweite Einschnürung ausgebildet ist, deren Breite höchstens deren Tiefe entspricht.

### Stand der Technik

Derartige Faltenbälge sind aus dem Stand der Technik bereits bekannt. Aus der EP 1 508 729 A1 ist ein Faltenbalg bekannt, bei dem lediglich eine Auswölbung im Bereich eines Anschlussstücks mit einer zweiten Einschnürung versehen ist. Aus der GB 2 031 530 A ist ein Faltenbalg bekannt, bei dem die Breite der zweiten Einschnürungen in der Größenordnung der Breite der ersten Einschnürungen liegt. Die DE 25 05 542 A1 offenbart einen gattungsbildenden Faltenbalg, dessen zweite Einschnürungen sehr flach und breit ausgedehnt sind. Faltenbälge dieser Art werden häufig Gelenken, insbesondere Gelenken für Antriebswellen von Kraftfahrzeugen, zugeordnet. Die Faltenbälge sind sowohl in axialer Richtung als auch in radialer Richtung belastbar. Die Falten eines solchen Faltenbalgs werden im Betrieb bei Abbeugung des Gelenks auf einer Seite gestreckt und auf einer anderen Seite gestaucht. Dabei treten in den äußeren, einer Faltenspitze zugeordneten Bereichen, hohe Druckspannungen auf. Diese führen zu einer Belastung, welche zum Beulen der Falten führen können. Mit diesem Beulen geht in der Regel eine Zerstörung des Balges einher. Insbesondere können die nach außen gewölbten Faltenberge durch das Beulen nach innen gezwungen werden.

Die bekannten Faltenbälge können diesen Belastungsmomenten nicht zufriedenstellend begegnen. Das Beulen oder Einknicken der Falten könnte durch Erhöhung deren Widerstandsmoments verhindert werden. Hierzu ist denkbar, die Wanddicken des Grundkörpers zu vergrößern. Gleichzeitig jedoch soll der Widerstand der Falten gegen Streck- und Stauchvorgänge verringert werden. Insbesondere soll die axiale Steifigkeit eines Faltenbalgs verringert und somit die Beweglichkeit mit Bezug auf diesen Freiheitsgrad verbessert werden. Die radiale Steifigkeit soll hingegen deutlich erhöht werden, um das Einknicken bis zu einer bestimmten Belastung zu verhindern.

Die gattungsbildenden Faltenbälge können aufgrund ihrer konstruktiven Ausgestaltung diese dynamischen Eigenschaften nicht zeigen.

### Darstellung der Erfindung

Der Erfindung liegt daher die Aufgabe zugrunde, einen Faltenbalg der eingangs genannten Art derart auszugestalten und weiter zu bilden, dass der Faltenbalg eine lange Lebensdauer aufweist und definiert belastbar ist.

Die vorliegende Erfindung löst die zuvor genannte Aufgabe durch die Merkmale des Patentanspruchs 1. Danach ist ein Faltenbalg dadurch gekennzeichnet, dass die Breite der zweiten Einschnürung geringer ist als die Wandungsdicke des Grundkörpers.

Erfindungsgemäß ist erkannt worden, dass eine flache Einschnürung die axiale Steifigkeit eines Federbalgs nicht oder kaum verringert. Des Weiteren ist erkannt worden, das die radiale Steifigkeit durch eine flache Einschnürung nicht oder kaum erhöht wird. In einem zweiten Schritt ist erkannt worden, dass die Vorkehrung einer Einschnürung, welche länglich ausgebildet ist, die axiale Steifigkeit eines Federbalgs spürbar verringert und die radiale Steifigkeit deutlich erhöht. In einem dritten Schritt ist schließlich erkannt worden, dass das Widerstandsmoment des Faltenbalgs gegen Beulen oder Einknicken erhöht werden kann, ohne die Wanddicken zu vergrößern, indem die Geometrie der Einschnürung erfindungsgemäß gewählt wird. Die Breite der zweiten Einschnürungen ist geringer als die Wandungsdicke des Grundkörpers. Diese Ausgestaltung realisiert, dass die zweiten Einschnürungen quasi als Soll-Bruchstellen oder Soll-Einknickstellen fungieren, welche den Grundkörper vorteilhaft entlasten. Hierdurch ist gewährleistet, dass der Faltenbalg eine lange Lebensdauer aufweist und definiert belastbar ist.

Folglich ist mit dem erfindungsgemäßen Faltenbalg ein Faltenbalg angegeben, welcher die Eingangs genannte Aufgabe löst.

In einer konstruktiv besonders günstigen Ausgestaltung könnten die zweiten Einschnürungen von zwei Stegen begrenzt werden. Hierdurch wird der Widerstand gegen Einbeulen erhöht. Gleichzeitig verringern die Stege in Stauch- und Streckrichtung den Widerstand gegen diese Verformungen. Dabei ist denkbar, dass an allen zweiten Einschnürungen Stege vorgesehen sind oder nur an einzelnen Einschnürungen.

Die ersten und zweiten Einschnürungen könnten konzentrisch angeordnet sein. Hierbei ist insbesondere denkbar, dass die ersten Einschnürungen einen geringeren Umfang aufweisen als die zweiten Einschnürungen. Diese konkrete Ausgestaltung stellt einen symmetrischen Aufbau des Faltenbalgs sicher, welcher sich in einer vorteilhaften Bewegungsdynamik ausdrückt.

Die zweiten Einschnürungen könnten eine Breite von höchstens einem Millimeter aufweisen. Diese Ausgestaltung stellt sicher, dass die Oberfläche des Grundkörpers in ihrer Homogenität nur wenig gestört ist. Des Weiteren ist vorteilhaft realisiert, dass sich Verschmutzungen nur in sehr geringem Maße in den Einschnürungen ansammeln können.

Die Tiefe der zweiten Einschnürungen könnte größer oder gleich der Wandungsdicke des Grundkörpers sein. Diese Ausgestaltung stellt sicher, dass die zweiten Einschnürungen mit Bezug auf das Wandmaterial eine längliche Vertiefung darstellen, welche die axiale Steifigkeit deutlich verringert. Die zweite Einschnürung weist insoweit eine Dimension auf, die auf das Steifigkeitsverhalten einen deutlichen Einfluss nimmt. Vor diesem Hintergrund könnten die zweiten Einschnürungen eine Tiefe von 1 mm bis 2 mm aufweisen. Diese Dimensionierung ist insbesondere vorteilhaft, wenn der Grundkörper aus einem thermoplastischen Elastomer gefertigt ist. Thermoplastische Elastomere weisen aufgrund ihrer Materialstruktur eine Steifigkeit auf, welche durch Einschnürungen der genannten Dimensionierung besonders vorteilhaft im Hinblick auf ihre Steifigkeit modifizierbar sind.

Die zweiten Einschnürungen könnten im Bereich des äußersten Umfangs der Auswölbungen ausgebildet sein. Dabei ist insbesondere denkbar, dass die Einschnürungen in der Mitte der Auswölbungen angeordnet sind und diese quasi in zwei Segmente teilen. Diese konkrete Ausgestaltung erlaubt es, dass sich die Segmente relativ zueinander bewegen und von Spitzenbelastungen durch Stauchen oder Strecken des Faltenbalgs befreit sind. Die zweiten Einschnürungen könnten im Querschnitt dreieckförmig ausgebildet sein. Die Dreieckform bildet vorteilhaft zwei Schenkel, welche besonders kraftgünstig gegeneinander bewegbar sind. Insoweit verleiht die Einschnürung dem Faltenbalg besondere elastische Eigenschaften. Die zweiten Einschnürungen können im Querschnitt rechteckförmig ausgebildet sein. Diese Ausgestaltung zeichnet sich durch eine problemlose Fertigung aus, da rechteckförmige Elemente bei Entformungsvorgängen besonders leicht vom Werkstück enffembar sind.

Die zweiten Einschnürungen könnten im Querschnitt trapezförmig ausgebildet sein, Auch die Trapezform ermöglicht ein leichtes Entformen eines Werkstücks. Darüber hinaus können trapezförmig ausgebildete Einschnürungen besonders leicht von Verunreinigungen gereinigt werden, da sie nach außen offen ausgebildet sind.

Die zweiten Einschnürungen könnten im Querschnitt rhombusförmig ausgebildet sein. Diese Ausgestaltung gewährleistet, dass in den Innenraum der Einschnürung keine Schmutzpartikel eindringen können, da die Rhombusform nur einen geringen Spalt nach außen definiert.

Die zweiten Einschnürungen könnten im Querschnitt Vieleckförmig ausgebildet sein. Dabei kann die Anzahl der Ecken in Abhängigkeit von der gewünschten Elastizität gewählt werden.

Die zweiten Einschnürungen könnten im Querschnitt halbkreisförmig ausgebildet sein. Ein Halbkreis realisiert eine Einschnürung, deren Breite gleich deren Tiefe ist Des Weiteren ennöglicht sie eine leichte Reinigung der Einschnürung, da sie nach außen sichelförrnig geöffnet und damit leicht zugänglich ist.

Die zweiten Einschnürungen könnten im Querschnitt ellipsenförmig, parabelförmig oder hyperbelförmig ausgebildet sein. Ganz in Abhängigkeit von den Anforderungen an das Verformungsverhalten des Faltenbalgs können diese speziellen Ausgestaltungen gewählt werden. Dabei realisiert eine Ellipse eine besonders große Steifigkeit in radialer Richtung, ein Paraboloid eine geringere Steifigkeit in radialer Richtung und ein Hyperboloid eine Zwischenstufe der genannten Steifigkeiten.

Die Einschnürungen könnten Hinterschneidungen aufweisen. Die Ausbildung von Hinterschneidungen ist vorteilhaft, um Belastungsspitzen in den Einschnürungen zu verhindern. Hierdurch wird die Lebensdauer des Faltenbalgs erhöht.

Vor diesem Hintergrund könnten in oder an den Einschnürungen abgerundete Ecken ausgebildet sein. Auch die Ausbildung abgerundeter Ecken stellt sicher, dass das Material des Grundkörpers bei dynamischen Vorgängen keinen Spitzenbelastungen unterworfen wird. Insoweit wird eine Materialermüdung und ein erhöhter Verschleiß wirksam vermieden.

Der Grundkörper könnte rotationssymmetrisch ausgebildet sein. Diese Ausgestaltung erlaubt eine besonders problemlose Fertigung des Grundkörpers.

Die Enden des Grundkörpers könnten als Enden eines axialen Durchgangs ausgebildet sein. Dabei könnten die Enden zylinderförmig ausgestaltet sein. Diese konkrete Ausgestaltung erlaubt die Zuordnung des Faltenbalgs an zylinderförmige Elemente wie Wellen oder Stangen. Dabei wird ein zwischen zwei Stangen oder Wellen angeordnetes Gelenk im Inneren des Grundkörpers aufgenommen.

Vor diesem Hintergrund könnte der Grundkörper zumindest abschnittsweise kegelstumpfartig ausgebildet sein. Die Verjüngung des Kegelstumpfs könnte in Abhängigkeit von den Winkeln gewählt werden, welche die durch ein Gelenk verbundenen Stangen einzuschließen vermögen. Die Wahl der Konizität erlaubt somit, die Belastung des Grundkörpers bei Stauchung oder Streckung vorteilhaft einzustellen.

Es gibt nun verschiedene Möglichkeiten, die Lehre der vorliegenden Erfindung auf vorteilhafte Weise auszugestalten und weiter zu bilden. Dazu ist einerseits auf die dem Patentanspruch 1 nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen:
Fig. 1 einen Faltenbalg, welcher Auswölbungen mit Einschnürungen aufweist,
Fig. 2 eine Auswölbung mit einer im Querschnitt dreieckförmigen zweiten Einschnürung,
Fig. 3 eine im Querschnitt rechteckförmige Einschnürung,
Fig. 4 eine im Querschnitt trapezförmige Einschnürung,
Fig. 5 eine im Querschnitt rhombusförmige Einschnürung,
Fig. 6 eine im Querschnitt vieleckige Einschnürung,
Fig. 7 eine im Querschnitt halbkreisförmige Einschnürung,
Fig. 8 eine im Querschnitt ellipsenförmige Einschnürung
Fig. 9 eine im Querschnitt hyperbelförmige Einschnürung,
Fig. 10 eine im Querschnitt symmetrisch vieleckige Einschnürung und
Fig. 11 eine im Querschnitt parabelförmige Einschnürung.

### Ausführung der Erfindung

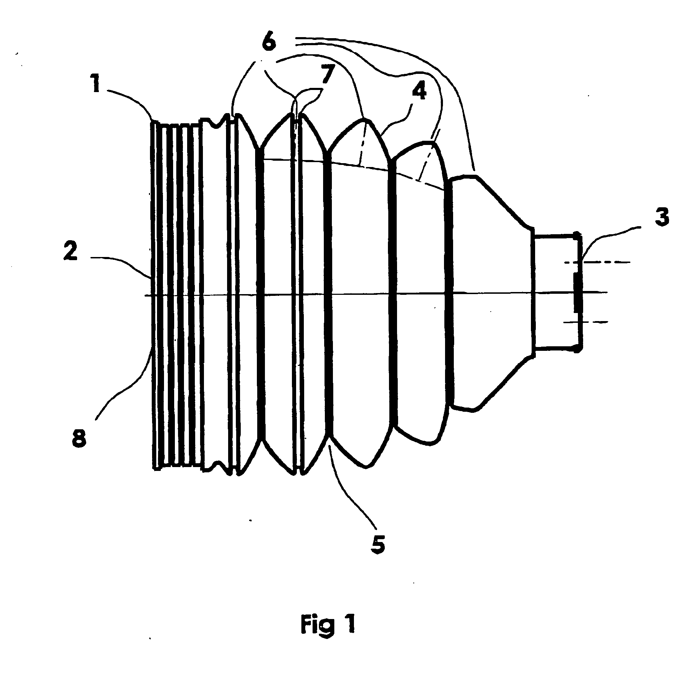

Fig. 1 zeigt einen Faltenbalg mit einem Grundkörper 1 mit einem ersten Ende 2 und einem zweiten Ende 3, wobei die Enden 2,3 relativ zueinander bewegbar sind, wobei im Grundkörper 1 zwischen den Enden umfängliche Auswölbungen 4 ausgebildet sind, welche durch erste Einschnürungen 5 voneinander beabstandet sind und wobei in zumindest einer Auswölbung 4 eine zweite Einschnürung 6 ausgebildet ist. Dabei weist die Breite der zweiten Einschnürung 6 einen Wert auf, der höchstens dem Wert ihrer Tiefe entspricht. Die zweiten Einschnürungen 6 werden von zwei Stegen 7 begrenzt. Die ersten Einschnürungen 5 und die zweiten Einschnürungen 6 sind konzentrisch um eine Achse durch die Enden 2,3 angeordnet. Die zweiten Einschnürungen 6 sind im Bereich des äußersten Umfangs der Auswölbungen 4 ausgebildet.
   Der Grundkörper 1 ist rotationssymmetrisch ausgebildet. Die Enden 2,3 sind als Enden 2,3 eines axialen Durchgangs 8 im Grundkörper 1 ausgebildet. Der Grundkörper 1 ist zumindest abschnittsweise kegelstumpfartig ausgebildet.

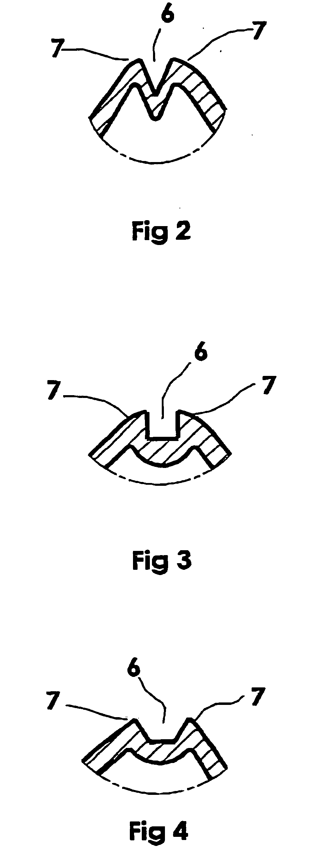

Fig. 2 zeigt eine im Querschnitt dreieckförmige zweite Einschnürung.
Fig. 3 zeigt eine im Querschnitt rechteckförmige Einschnürung.
Fig. 4 zeigt eine im Querschnitt trapezförmige Einschnürung 6.

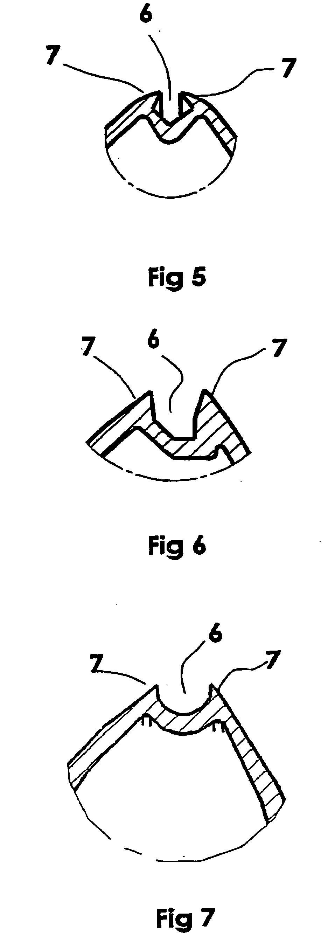

Fig. 5 zeigt eine im Querschnitt rhombusförmige zweite Einschnürung 6.

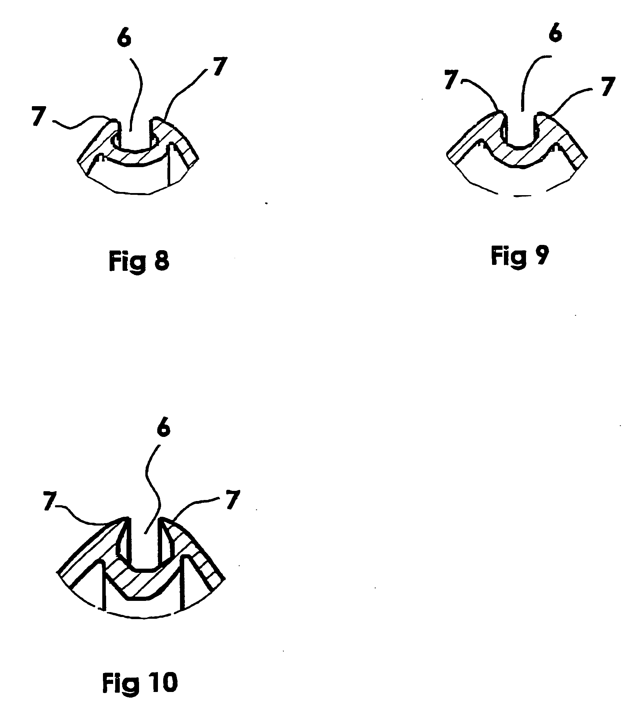

Fig. 6 und Fig. 10 zeigen jeweils eine im Querschnitt vieleckige zweite Einschnürung 6.
Fig. 7 zeigt eine im Querschnitt halbkreisförmige Einschnürung 6 mit zwei spitzen Stegen 7.
Fig. 8 zeigt eine zweite Einschnürung 6, welche im Querschnitt elliptisch ausgebildet ist und zwei Stege 7 aufweist.
Fig. 9 zeigt eine zweite Einschnürung 6, welche im Querschnitt hyperbelförmig ausgebildet ist und zwei Stege 7 aufweist.
Fig. 10 zeigt eine im Querschnitt symmetrisch vieleckige Einschnürung 6.

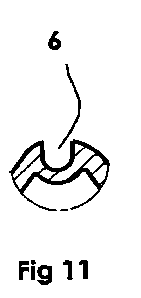

Fig. 11 zeigt eine zweite Einschnürung 6, welche im Querschnitt parabelförmig ausgebildet ist

Hinsichtlich weiterer vorteilhafter Ausgestaltungen und Weiterbildung der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Faltenbalg, umfassend einen Grundkörper (1) mit einem ersten Ende (2) und einem zweiten Ende (3), wobei die Enden (2, 3) relativ zueinander bewegbar sind, wobei im Grundkörper (1) zwischen den Enden (2, 3) umfängliche Auswölbungen (4) ausgebildet sind, welche durch erste Einschnürungen (5) voneinander beabstandet sind, und wobei in mehreren Auswölbungen (4) eine zweite Einschnürung (6) ausgebildet ist, deren Breite höchstens deren Tiefe entspricht,
**dadurch gekennzeichnet, dass**
die Breite der zweiten Einschnürung (6) geringer ist als die Wandungsdicke des Grundkörpers (1).

2. Faltenbalg nach Anspruch 1, **dadurch gekennzeichnet, dass** die zweite Einschnürung (6) von zwei Stegen (7) begrenzt wird.

3. Faltenbalg nach Anspruch 1 oder 2, **dadurch gekennzeichnet, dass** die ersten (5) und zweiten Einschnürungen (6) konzentrisch angeordnet sind.

4. Faltenbalg nach einem der Ansprüche 1 bis 3, **dadurch gekennzeichnet, dass** die zweite Einschnürung (6) eine Breite von höchstens 1 mm aufweist.

5. Faltenbalg nach einem der Ansprüche 1 bis 4, **dadurch gekennzeichnet, dass** die Tiefe der zweiten Einschnürung (6) größer oder gleich der Wandungsdicke des Grundkörpers (1) ist.

6. Faltenbalg nach einem der Ansprüche 1 bis 5, **dadurch gekennzeichnet, dass** die zweite Einschnürung (6) eine Tiefe von 1 mm bis 2 mm aufweist.

7. Faltenbalg nach einem der Ansprüche 1 bis 6, **dadurch gekennzeichnet, dass** die zweite Einschnürung (6) im Bereich des äußersten Umfangs der Auswölbungen (4) ausgebildet ist.

8. Faltenbalg nach einem der Ansprüche 1 bis 7, **dadurch gekennzeichnet, dass** die zweite Einschnürung (6) im Querschnitt dreieckförmig ausgebildet ist.

9. Faltenbalg nach einem der Ansprüche 1 bis 7, **dadurch gekennzeichnet, dass** die zweite Einschnürung (6) im Querschnitt rechteckförmig ausgebildet ist.

10. Faltenbalg nach einem der Ansprüche 1 bis 7, **dadurch gekennzeichnet, dass** die zweite Einschnürung (6) im Querschnitt trapezförmig ausgebildet ist.

11. Faltenbalg nach einem der Ansprüche 1 bis 7, **dadurch gekennzeichnet, dass** die zweite Einschnürung (6) im Querschnitt rhombusförmig ausgebildet ist.

12. Faltenbalg nach einem der Ansprüche 1 bis 7, **dadurch gekennzeichnet, dass** die zweite Einschnürung (6) im Querschnitt vieleckförmig ausgebildet ist.

13. Faltenbalg nach einem der Ansprüche 1 bis 7, **dadurch gekennzeichnet, dass** die zweite Einschnürung (6) im Querschnitt halbkreisförmig ausgebildet ist.

14. Faltenbalg nach einem der Ansprüche 1 bis 7, **dadurch gekennzeichnet, dass** die zweite Einschnürung (6) im Querschnitt ellipsenförmig ausgebildet ist.

15. Faltenbalg nach einem der Ansprüche 1 bis 7, **dadurch gekennzeichnet, dass** die zweite Einschnürung (6) im Querschnitt parabelförmig ausgebildet ist.

16. Faltenbalg nach einem der Ansprüche 1 bis 7, **dadurch gekennzeichnet, dass** die zweite Einschnürung (6) im Querschnitt hyperbelförmig ausgebildet ist.

17. Faltenbalg nach einem der Ansprüche 1 bis 16, **dadurch gekennzeichnet, dass** die zweite Einschnürung (6) Hinterschneidungen aufweist.

18. Faltenbalg nach einem der Ansprüche 1 bis 17, **dadurch gekennzeichnet, dass** in oder an der Einschnürung (6) abgerundete Ecken ausgebildet sind.

19. Faltenbalg nach einem der Ansprüche 1 bis 18, **dadurch gekennzeichnet, dass** der Grundkörper (1) rotationssymmetrisch ausgebildet ist.

20. Faltenbalg nach einem der Ansprüche 1 bis 19, **dadurch gekennzeichnet, dass** die Enden (2, 3) als Enden eines axialen Durchgangs (8) im Grundkörper (1) ausgebildet sind.

21. Faltenbalg nach einem der Ansprüche 1 bis 20, **dadurch gekennzeichnet, dass** der Grundkörper (1) zumindest abschnittsweise kegelstumpfartig ausgebildet ist.

## Claims

1. Bellows, comprising a basic body (1) with a first end (2) and with a second end (3), the ends (2, 3) being movable in relation to one another, there being formed in the basic body (1), between the ends (2, 3), circumferential protuberances (4) which are spaced apart from one another by first contractions (5), and there being formed in a plurality of protuberances (4) a second contraction (6), the width of which corresponds at most to its depth,
**characterized in that**
the width of the second contraction (6) is smaller than the wall thickness of the basic body (1).

2. Bellows according to Claim 1, **characterized in that** the second contraction (6) is delimited by two webs (7).

3. Bellows according to Claim 1 or 2, **characterized in that** the first (5) and second (6) contractions are arranged concentrically.

4. Bellows according to one of Claims 1 to 3, **characterized in that** the second contraction (6) has a width of at most 1 mm.

5. Bellows according to one of Claims 1 to 4, **characterized in that** the depth of the second contraction (6) is greater than or equal to the wall thickness of the basic body (1).

6. Bellows according to one of Claims 1 to 5, **characterized in that** the second contraction (6) has a depth of 1 mm to 2 mm.

7. Bellows according to one of Claims 1 to 6, **characterized in that** the second contraction (6) is formed in the region of the outermost circumference of the protuberances (4).

8. Bellows according to one of Claims 1 to 7, **characterized in that** the second contraction (6) is formed with a triangular cross section.

9. Bellows according to one of Claims 1 to 7, **characterized in that** the second contraction (6) is formed with a rectangular cross section.

10. Bellows according to one of Claims 1 to 7, **characterized in that** the second contraction (6) is formed with a trapezoidal cross section.

11. Bellows according to one of Claims 1 to 7, **characterized in that** the second contraction (6) is formed with a rhombic cross section.

12. Bellows according to one of Claims 1 to 7, **characterized in that** the second contraction (6) is formed with a polygonal cross section.

13. Bellows according to one of Claims 1 to 7, **characterized in that** the second contraction (6) is formed with a semicircular cross section.

14. Bellows according to one of Claims 1 to 7, **characterized in that** the second contraction (6) is formed with an elliptical cross section.

15. Bellows according to one of Claims 1 to 7, **characterized in that** the second contraction (6) is formed with a parabolic cross section.

16. Bellows according to one of Claims 1 to 7, **characterized in that** the second contraction (6) is formed with a hyperbolic cross section.

17. Bellows according to one of Claims 1 to 16, **characterized in that** the second contraction (6) has undercuts.

18. Bellows according to one of Claims 1 to 17, **characterized in that** rounded corners are formed in or at the contraction (6).

19. Bellows according to one of Claims 1 to 18, **characterized in that** the basic body (1) is formed rotationally symmetrically.

20. Bellows according to one of Claims 1 to 19, **characterized in that** the ends (2, 3) are formed as ends of an axial passage (8) in the basic body (1).

21. Bellows according to one of Claims 1 to 20, **characterized in that** the basic body (1) is formed at least partially in the manner of a cone frustum.

## Revendications

1. Soufflet de protection, comprenant un corps de base (1) avec une première extrémité (2) et une deuxième extrémité (3), dans lequel les extrémités (2, 3) sont mobiles l'une par rapport à l'autre, dans lequel des renflements périphériques (4) sont formés dans le corps de base (1) entre les extrémités (2, 3), qui sont espacées l'une de l'autre par des premières gorges (5), et dans lequel une deuxième gorge (6), dont la largeur correspond au maximum à sa profondeur, est formée dans plusieurs renflements (4), **caractérisé en ce que** la largeur de la deuxième gorge (6) est inférieure à l'épaisseur de paroi du corps de base (1).

2. Soufflet de protection selon la revendication 1, **caractérisé en ce que** la deuxième gorge (6) est limitée par deux nervures (7).

3. Soufflet de protection selon la revendication 1 ou 2, **caractérisé en ce que** les premières (5) et les deuxièmes (6) gorges sont concentriques.

4. Soufflet de protection selon l'une quelconque des revendications 1 à 3, **caractérisé en ce que** la deuxième gorge (6) présente une largeur de 1 mm au maximum.

5. Soufflet de protection selon l'une quelconque des revendications 1 à 4, **caractérisé en ce que** la profondeur de la deuxième gorge (6) est supérieure ou égale à l'épaisseur de paroi du corps de base (1).

6. Soufflet de protection selon l'une quelconque des revendications 1 à 5, **caractérisé en ce que** la deuxième gorge (6) présente une profondeur de 1 mm à 2 mm.

7. Soufflet de protection selon l'une quelconque des revendications 1 à 6, **caractérisé en ce que** la deuxième gorge (6) est formée dans la région de la périphérie la plus extérieure des renflements (4).

8. Soufflet de protection selon l'une quelconque des revendications 1 à 7, **caractérisé en ce que** la deuxième gorge (6) présente une section transversale triangulaire.

9. Soufflet de protection selon l'une quelconque des revendications 1 à 7, **caractérisé en ce que** la deuxième gorge (6) présente une section transversale rectangulaire.

10. Soufflet de protection selon l'une quelconque des revendications 1 à 7, **caractérisé en ce que** la deuxième gorge (6) présente une section transversale trapézoïdale.

11. Soufflet de protection selon l'une quelconque des revendications 1 à 7, **caractérisé en ce que** la deuxième gorge (6) présente une section transversale en forme de losange.

12. Soufflet de protection selon l'une quelconque des revendications 1 à 7, **caractérisé en ce que** la deuxième gorge (6) présente une section transversale polygonale.

13. Soufflet de protection selon l'une quelconque des revendications 1 à 7, **caractérisé en ce que** la deuxième gorge (6) présente une section transversale semi-circulaire.

14. Soufflet de protection selon l'une quelconque des revendications 1 à 7, **caractérisé en ce que** la deuxième gorge (6) présente une section transversale en forme d'ellipse.

15. Soufflet de protection selon l'une quelconque des revendications 1 à 7, **caractérisé en ce que** la deuxième gorge (6) présente une section transversale en forme de parabole.

16. Soufflet de protection selon l'une quelconque des revendications 1 à 7, **caractérisé en ce que** la deuxième gorge (6) présente une section transversale en forme d'hyperbole.

17. Soufflet de protection selon l'une quelconque des revendications 1 à 16, **caractérisé en ce que** la deuxième gorge (6) présente des contre-dépouilles.

18. Soufflet de protection selon l'une quelconque des revendications 1 à 17, **caractérisé en ce que** des coins arrondis sont formés dans ou sur la gorge (6).

19. Soufflet de protection selon l'une quelconque des revendications 1 à 18, **caractérisé en ce que** le corps de base (1) présente la symétrie de révolution.

20. Soufflet de protection selon l'une quelconque des revendications 1 à 19, **caractérisé en ce que** les extrémités (2, 3) forment les extrémités d'un passage axial (8) dans le corps de base (1).

21. Soufflet de protection selon l'une quelconque des revendications 1 à 20, **caractérisé en ce que** le corps de base (1) a au moins localement la forme d'un tronc de cône.
